(19) **Europäisches Patentamt / European Patent Office / Office européen des brevets**

(11) **EP 2 229 786 B1**

(12) **EUROPEAN PATENT SPECIFICATION**

(45) Date of publication and mention of the grant of the patent:
**25.07.2012 Bulletin 2012/30**

(51) Int Cl.:
*H04N 17/00* (2006.01)   *H04N 7/26* (2006.01)
*H04N 7/50* (2006.01)   *H04N 7/64* (2006.01)
*H04N 7/68* (2006.01)

(21) Application number: **09702928.4**

(22) Date of filing: **13.01.2009**

(86) International application number:
**PCT/US2009/000200**

(87) International publication number:
**WO 2009/091530 (23.07.2009 Gazette 2009/30)**

(54) **METHOD FOR ASSESSING PERCEPTUAL QUALITY**

VERFAHREN ZUR BESTIMMUNG EINER WAHRNEHMUNGSQUALITÄT

PROCÉDÉ D'ÉVALUATION D'UNE QUALITÉ DE PERCEPTION

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **18.01.2008 US 11525 P**

(43) Date of publication of application:
**22.09.2010 Bulletin 2010/38**

(73) Proprietor: **Thomson Licensing**
**92130 Issy-les-Moulineaux (FR)**

(72) Inventors:
• **YANG, Hua**
**Princeton, NJ 08540 (US)**
• **LIU, Tao**
**Brooklyn, NY 11223 (US)**
• **STEIN, Alan, Jay**
**Princeton Junction, NJ 08550 (US)**

(74) Representative: **Rittner, Karsten**
**Deutsche Thomson OHG**
**European Patent Operations**
**Karl-Wiechert-Allee 74**
**30625 Hannover (DE)**

(56) References cited:
**WO-A-03/005726**   **WO-A-2007/130389**
**US-A1- 2007 280 129**

**Description**

**CROSS-REFERENCE TO RELATED APPLICATIONS**

This application claims the benefit of the filing date under 35 U.S.C. § 119(e) of Provisional Patent Application No. 61/011,525, filed January 18, 2008.

**FIELD OF THE INVENTION**

The present invention relates to a full-reference (FR) objective method of assessing perceptual quality and particularly relates to a full-reference (FR) objective method of assessing perceptual quality of decoded video frames in the presence of packet losses and coding artifacts.

**BACKGROUND OF THE INVENTION**

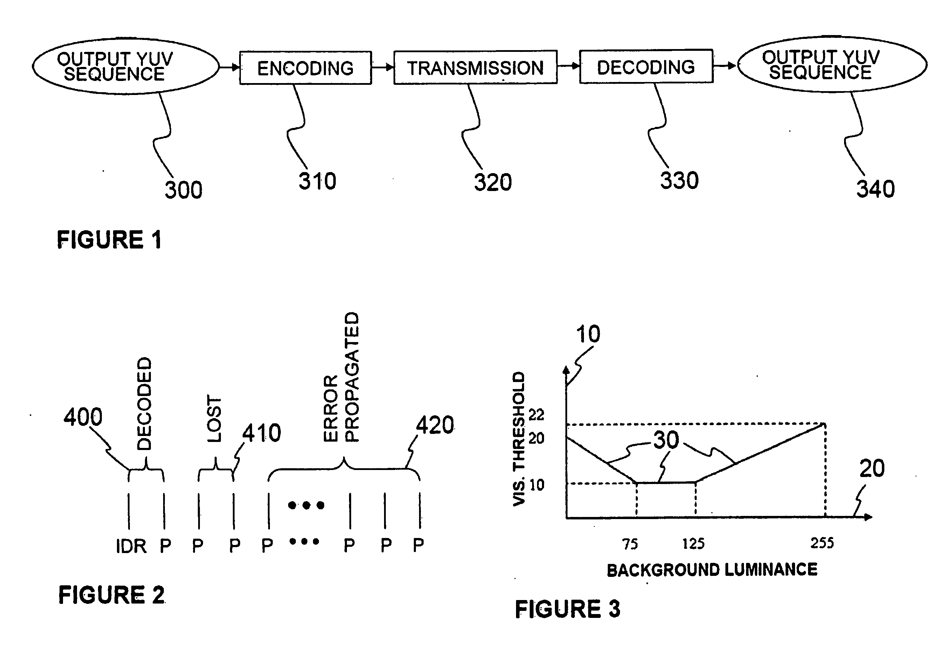

A typical video communication system can be decomposed into three main components, which are encoding 310 of an input YUV sequence, transmission 320, and decoding 330 to yield output YUV sequence 340, respectively, as illustrated in Figure 1. Perceptual quality degradation occurs in the processed video frames because of lossy encoding and packet losses in the imperfect transmission channel in the first two components. Although the average of frame peak signal-to-noise ratio (PSNR), mean squared error (MSE), or mean absolute error (MAE) has been found to correlate reasonably well with perceived quality of decoded video in the absence of transmission losses, it is not at all clear that such a measure bears much resemblance to the perceived quality in the presence of transmission losses.

As mobile telecommunication devices, such as cell phones and PDAs, become more popular, issues arise as how to guarantee video transmissions with satisfactory perceptual quality over these devices. However, to solve this problem seems challenging. First of all, the bandwidth of this wireless communication channel is relatively low, which typically constrains the bit rate of encoded video sequences to be low as well, which typically results in the video quality being compromised or reduced to a great extent. The unreliability of a wireless channel can also cause significant quality degradation of received videos. For example, the channel fading effect can lead to losses of a few slices up to several frames of transmitted videos. The quality evaluation of videos encoded with low bit-rate and low frame resolution, and with channel characteristics like third generation telecommunication network (3G), where bursty losses can cause two consecutive P-mode frames 410 to be lost in each group of pictures (GOP) of an encoded bitstream, is also a concern. The illustration of encoded video sequences (one GOP) with packet losses is shown in Figure 2, wherein block 400 reflects correctly decoded frames, block 410 reflects lost frames and block 420 reflects error propagating frames.

Since a decoder may not receive all of the video data, it has to conceal the lost date so that the rest of the video sequence can be fully decoded. However, the concealed data can propagate errors to the following frames in the GOP, and the actual propagation effect depends on different error concealments. In a JM10.0 H.264/AVC decoder, there are three error concealment methods: frame-copy, motion-copy, and frame-freeze.

The frame-freeze method conceals the loss by discarding all the data in the GOP received after the loss, and holding the last correctly decoded frame until the end of the GOP, so visually, each loss causes the video to have one frame frozen for a time of several frames. Because there is no spatial chaos in video frames after concealing by this method, the impact of temporal factors on perceptual quality is dominant.

Generally, motion-copy and frame-copy methods are similar in perceptual effects on error-propagated frames, and there is obvious local image chaos along the edges of the objects with motion, which greatly degrades the perceptual quality of video frames. However, for the concealed lost frames, the frame-copy method just copies the last correctly decoded frame, while motion-copy estimates the lost frames based on the motion information of the last correctly decoded frames.

A metric is a verifiable measure stated in either quantitative or qualitative terms. The metric is a verifiable measure that captures performance in terms of how something is being done relative to a standard. Quality metric data can be used to spot trends in performance, compare alternatives, or even predict performance. Often, identifying effective metrics is difficult.

Objective image or video quality metrics can be classified according to the accessibility to the original reference image, and such a classification can include three categories: full-reference (FR) methods, reduced-reference (RR) methods, and non-reference (NR) methods.

Many existing quality metrics are a full-reference (FR) method, meaning that a complete reference image can be accessed. In many practical applications, however, the reference image is not available, and a non-reference (NR) method or "blind" quality assessment approach is desirable. Reduced-reference (RR) methods lie between the above two extremes, because part of the reference image is available to help evaluate the quality of the distorted image.

In a typical video communication system, the distortion can be introduced by both coding artifact and transmission error due to lossy encoding and an imperfect channel, as shown in Figure1.

Traditional error-sensitivity schemes include measures such as, for example, PSNR, MSE, or MAE, which assume that the image or video quality degradation is the average the squared intensity differences of distorted and reference image pixels. However, they do not necessarily match actual perceptual quality ratings very well, especially in the presence of packet loss. The metrics, in the other subcategory, assume that human visual systems (HVS) are highly adapted for extracting structural information, rather than each individual pixel. (see Z. Wang, A. Bovik H. Sheikh, and E. Simoncelli, "Image Quality Assessment: From Error Visibility to Structural Similarity", IEEE Transactions on Image Processing, vol. 13, no. 4, Apr. 2004)

Specifically, these metrics compare luminance, contrast, and structure information of reference and distorted images, based on their first and second moment statistics within sliding rectangular windows running all over the images. Although they can evaluate similarity between reference and distorted images fairly well, with and without some common noises, computation complexity increases significantly. Further, experiments on video frames, corrupted by packet loss, prove that good performance cannot be maintained.

In order to improve the performance of error-sensitivity approach, a great deal of effort has gone into the development of quality assessment methods that take advantage of known characteristics of HVS.

The majority of the proposed perceptual quality assessment models have followed a strategy of pooling the differences between original and distorted images, so that they are penalized, in accordance with their impacts on perceptual quality. Although these models improve the correlation between objective model scores and subjective quality ratings for encoded videos with coding artifacts, they all fail in the presence of packet loss. (see W. Lin, L. Dong, and P. Xue et a. "Visual Distortion Gauge Based on Discrimination of Noticeable Contrast Changes ", IEEE Transactions on Circuits and Systems for Video Technology, vol. 15, No. 7, July 2003; Z. Wang, A. C. Bovik "A human visual system based objective video distortion measurement system ", Proceedings of the International Conference on Multimedia Processing and Systems, August 2001.) As the problem of visual impact of packet loss becomes stringent, some work has started inresearching in this field.

M. Claypool and J. Tanner found, in "The Effects of Jitter on the Perceptual Quality of Video", that jitter degrades perceptual quality nearly as much as does packet loss, and that perceptual quality degrades sharply even with low levels of jitter or packet loss, as compared to perceptual quality for perfect video. (see M Claypool and J. Tanner "The Effects of Jitter on the Perceptual Quality of Video ", ACM Multimedia, Volume 2 , Orlando, FL,November 1999) R. R. Pastrana-Vidal and J. C. Gicquel developed a metric to evaluate the impact of fluidity breaks, caused by image dropping, on user quality perception were presented. (see R. R. Pastrana-Vidal and J. C. Gicquel, "Automatic quality assessment of video fluidity impairments using a no-reference metric", in Proc. of 2nd Int. Workshop on Video Processing and Quality Metrics for Consumer Electronics, Jan. 2006) This no-reference metric is able to calculate the effect on quality under several different image-dropping conditions. Further, K. Yang, C. Guest, K. El-Maleh, and P. Das disclose a novel objective temporal quality metric PTQM, which includes the amount of frame loss, object motion, and local temporal quality contrast. Unlike conventional approaches, this metric produces not just sequence, but also scene and even frame level temporal quality measurement. (see K. Yang, C. Guest, K. El-Maleh, and P. Das, "Perceptual temporal quality metric for compressed video" Multimedia, IEEE Transactions on, Nov.2007)

Although the proposed metric had results that are interesting, their works packet losses only cause the temporal degradation, but they do not cause spatial error propagation in following frames and the error propagation caused by packet loss is not discussed.

X. Feng and T. Liu, in "Evaluation of perceptual video quality using saliency map", use the automatic generated saliency maps for pooling MSE of error-propagated frames and the pooled error matches well with perceptual quality of those frames. (see X. Feng and T. Liu, "Evaluation of perceptual video quality using saliency map", ICIP, 2008, Submitted) However, the complicated computation of saliency maps is undesirable. In "No-reference metrics for video streaming applications", two NR metrics are proposed for measuring block edge impairment artifacts in decoded video, and evaluating the quality of reconstructed video in event of packet loss. (see R. Venkatesh, A, Bopardikar, A. Perkis and O. Hillestad, "No-reference metrics for video streaming applications, " in Proceedings of PV 2004, December 13-14, Irvine, CA, USA, 2004.] The blockiness metric, disclosed in "No-reference metrics for video streaming applications", is based on measuring the activity around the block edges and on counting the number of blocks that might contribute to the overall perception of blockiness in the video frame.

While the packet losses, examined in the aforementioned reference caused the spatial degradation, the loss is only across a few slices and not the whole frame. In this case, the distortions are shaped as rectangles, and strong discontinuities can be used as a hint of losses. However, it is advantageous to measure activity when the lost packets are whole frames, which raise the difficulty in distinguishing propagated errors.

Instead of using conventional approaches, the A. Reibman, S. Kanumuri, V. Vaishampayan, and P. Cosman, in "Visibility of individual packet losses in MPEG-2 video", develop statistical models to predict the visibility of a packet loss. (see A. Reibman, S. Kanumuri, V. Vaishampayan, and P. Cosman, "Visibility of individual packet losses in MPEG-2 video ". ICIP 2004.) Classification and Regression Trees (CART) and Generalized Linear Models (GLM) are used predict the visibility of a packet loss, while perceptual quality impact of packet losses are not explicitly discussed. U. Engelke, and H. Zepernick, in "An Artificial Neural Network for Quality Assessment in Wireless Imaging Based on Extraction of Structural Information ", disclose how Artificial Neural Networks (ANN) can be used for perceptual image quality assessment. (see U Engelke, and H Zepernick "An Artificial Neural Network for Quality Assessment in Wireless Imaging Based on Extraction of Structural Information ", ICASSP 2007.) The quality prediction is based on structural image features such as blocking, blur, image activity, and intensity masking. The advantage of ANN approach can achieve very high performance in real-time fashion, while its disadvantage lies in its significant complexity for implementing it. Additional prior art relating to video quality loss and/or characterization thereof are US2007/0280129 to Jia et al., WO2007/13038 to Suresh et al. and WO 03/005727 to Jung et al.

## SUMMARY OF THE INVENTION

The present invention is made in view of the technical problems described above, and it is an object of the present invention to provide a full-reference (FR) objective method for assessing perceptual quality of decoded video frames in the presence of packet losses and coding artifacts.

It is further an object of the invention to provide a method of assessing perceptual quality by first accessing a value indicating an amount of distortion in a corresponding portion, and then classifying the value as packet-loss distortion or coding-artifact distortion wherein a threshold is applied to each of the least one value. Next, the classified value is modified to account for visibility differences of the human visual system, based on the classification, wherein one or more masks are used to adjust each of the least one value, the one or more masks including a texture mask and a contrast mask and in which a JND is determined based on at least one of the one or more masks, a measure of edge intensity is used to determine a texture mask; and a piecewise continuous function of pixel-intensity is used to determine a contrast mask, and then the modified values are combined for the multiple portions, to form a value indicating a total amount of distortion for the multiple portions.

## BRIEF DESCRIPTION OF THE DRAWINGS

The invention will be explained in greater detail in the following with reference to embodiments, referring to the appended drawings, in which:

Figure 1 is a schematic representation of a typical video transmission system;

Figure 2 is a schematic representation of encoded video sequences (one GOP) with packet losses;

Figure 3 is a graphical representation of the visibility threshold due to background luminance adaptation .

## DETAILED DESCRIPTION OF THE INVENTION

The invention will now be described in greater detail. Reference will now be made in detail to the implementations of the present invention, which are illustrated in the accompanying drawings and equations.

At least one implementation provides a full-reference (FR) objective method of assessing perceptual quality of decoded video frames in the presence of packet losses. Based on the edge information of the reference frame, the visibility of each image block of an error-propagated frame is calculated and its distortion is pooled correspondingly, and then the quality of the entire frame is evaluated.

One such scheme addresses conditions occurring when video frames are encoded by H.264/AVC codec, and an entire frame is lost due to transmission error. Then, video is decoded with an advanced error concealment method. One such implementation provides a properly designed error calculating and pooling method that takes advantage of spatial masking effects of distortions caused by both coding distortion and packet loss. With fairly low complexity, at least one such proposed method of assessing perceptual quality provides quality ratings of degraded frames that correlate fairly well with actual subjective quality evaluation.

In another implementation, a full-reference (FR) method of assessing perceptual quality of encoded videos frames, corrupted by packet loss, targets the video sequence, encoded by an H.264/AVC codec with low bit rate and low resolution, transmitted through wireless networks.

In this situation, video quality is jointly affected by coding artifact, such as blurring, and by packet loss, which causes error propagated spatially and temporally. In such an implementation, a JM 10.0 H.264 decoder is used to decode the encoded sequences, where frame-copy error concealment is adopted. The GOP length of encoded video is short, so one bursty packet loss is assumed, which causes two frames to be lost within one GOP. Therefore, the error caused by one packet loss can propagate to the end of the GOP, not disturbed by another packet loss. Various implementations of the metric evaluate the qualities of all the frames in the video sequences, the correctly received frames, error concealed frames, error propagated frames, and these frame qualities can be applied directly or indirectly to generate a single numerical quality evaluation of the entire video sequence.

One aspect of method is to first locate both coding artifacts, and propagated errors caused by packet losses. The present invention evaluates the perceptual impacts of them separately, and then takes advantage of a weighted sum of the two distortions to evaluate the quality of the whole frame. The rationality of this discriminating treatment to the aforementioned two distortions is based on observations that the two different distortions degrade the video quality in significantly different manners and degrees, and these differences may not be appropriately modeled by their difference in MSE or MAE. The perceptual impact of packet losses is usually on local areas of an image, while the visual effect of a coding artifact of H.264, especially blurring, typically degrades the image quality in a global fashion.

Another aspect of evaluating the visual impact of error propagations is to differentiate the locations of errors. For example, determining whether the errors are in an edge area, a texture area, or a plain area. This is useful because the HVS responds differently to different positioned errors.

Errors that occur on the plain area or edge of an object seem more annoying than those in the textural area. Therefore, two spatial masking phenomena are considered for at least one implementation of the proposed method, in evaluation of video frame quality.

The whole process for implementation of a perceptual video quality evaluation method can be broken into four components: (i) edge detecting of reference image, (ii) locating coding artifact distortion and propagated errors caused by packet loss distortion, (iii) calculating perceptual distortions for packet loss affected and source coding affected blocks, respectively, and (iv) pooling together distortions from all the blocks in a frame, each of which will be discussed in detail in next part of this document.

A preferred embodiment of the invention is outlined which begins with a reference frame (i.e. original frame) being provided in block 100. From the reference frame, edge detection is performed in block 110 followed by a calculation of edge density for each 8x8 block, which then feeds specific edge density values into block 141. (In the preferred embodiment the frames are first divided in 8x8 blocks and each of these sections in referred to as an 8x8 block.) Additionally, from the reference frame, a mean luminance value for each 8x8 block (mean_luma(i,j)) is calculated in block 125, which also fed into block 141. Block 140 represents an additional calculation which is also fed into block 141. Block 140 is the calculation of the original distortion, which in the preferred embodiment is calculated as the mean-absolute-difference (MAE) between the reference frame and a processed frame shown in block 110 for each 8x8 block as defined in Equation 1. (Equation 1 and the other equation mentioned in this description are described in later paragraphs.) Next, decisional block 150 takes the data from block 141 and determines if the original distortion of the concerned 8x8 block exceeds a certain threshold, which in the preferred embodiment with MAE distortion having the preferred threshold being 10. If the threshold exceeds the block MAE, then the block is identified as a source coding affected block, and the source coding incurred perceptual (visual) distortion $D_C^{ind}(i,j)$ in block 155 is calculated by Equation 6. Otherwise, the block is identified as a packet loss affected block and JND(i,j) is calculated in block 130 by Equation 4, incorporating texture and contrast masking consideration, which then followed by calculating the packet loss incurred perceptual (visible or vis.) distortion $D_P^{ind}(i,j)$ in block 135 using Equation 5. In block 130, to calculate cont_thresh(i,j), one should refer to Figure 3 and use mean_luma(i,j) for the background luminance. The results from the decision block 150 fed into block 156 and from there, the perceptual pooling for the whole frame in block 160 is calculated using Equation 7 which results in the perceptual distortion of the frame in block 165.

I. Edge detection

Edge information is very important in the research of image/video understanding and quality assessment. First, the HVS is more sensitive to contrast than absolute signal strength, and discontinuity of image in the presence of packet loss may be the clue for humans to tell the errors. Therefore, the edge and contour information may be the most important information for evaluating image quality in the scenario of packet loss. In addition, the density of strong edges can be considered as an indication of the texture richness or activity level of images and videos, which is closely related to another very important HVS property, spatial masking effect.

Extraction of edge information can be performed using an edge detection method. In one implementation, the popular Laplacian of Gausian (LoG) method may be used with the threshold set to 2.5, which renders relatively strong edges in reference frames.

II. Locations of Distortions

Some of the most widely accepted methods of calculating the distortions between reference and test video frames are, MAE, MSE or PSNR, which can be calculated mathematically as follows:

$$MAE = \frac{1}{XY}\sum_{x=1}^{X}\sum_{y=1}^{Y}|o(x,y,t_n)-d(x,y,t_n)| \qquad (1)$$

$$MSE = \frac{1}{XY}\sum_{x=1}^{X}\sum_{y=1}^{Y}(o(x,y,t_n)-d(x,y,t_n))^2 \qquad (2)$$

$$PSNR = 10\log\frac{A^2}{MSE} \qquad (3)$$

The variables $o(x, y, t_n)$ and $d(x, y, t_n)$ denote the original (i.e. reference frame in block 100) and the processed video image (i.e. processed frame in block 105) pixels at position $(x,y)$ in frame $t_n$, variable A represents the maximum grey level of the image (for example, for an 8-bit representation), and the X and Y variables denote the frame dimensions.

If only a small area of an image is considered, MAE and MSE can generally be modified to local MAE and MSE, which evaluates local distortion of a test image. The evaluation can be performed using, for example, only luminance components for the sake of efficiency, because luminance typically plays a much more significant role than chrominance in visual quality perception.

The artifacts of lossy coding, such as H.264 coding, are typically caused by uniform quantization of prediction errors of motion estimation between video frames. Because of a very powerful deblocking filter in the decoder, the dominant visual distortion is typically blurring, which can be perceived on the edge of objects or relatively smooth areas of an image. In addition, such artifacts typically perceptually degrade the quality of frames globally.

While the loss of one or more packets in a frame can degrade video quality, the more problematic situation is typically the propagation of errors to dependent frames. The main quality degradations in those frames are typically local image chaos or some small pieces of image located at wrong positions, especially around the edges of objects with motion. It can be hard to process the two kinds of distortions using a single uniform algorithm. The present invention addresses such a situation, in various implementations, by treating the two kinds of distortions differently.

According to the calculation of local MAE, usually propagated errors will produce much higher distortion than coding artifacts in the distorted area. Therefore, we have determined that a proper selection of a threshold for local MAE can be used to differentiate the two distortions.

In at least one implementation, of the present invention, the whole reference and test frames are first divided into 8x8 blocks, , and the original distortion denoted as $D_o(i,j)$ in Equations 5 and 6 and Figure 4 is calculated for the block, which in the preferred embodiment is calculated as MAE as defined in Equation(1). The threshold in decision block 150 is set to 10 for the preferred MAE distortion, so that the block with distortion more than or equal to 10 is considered as propagated error areas, and those blocks with distortion below 10 are considered to be areas having coding artifacts, such as a blurred area.

Because coding artifacts are typically dependent on the quantization parameter (QP) of an encoder, the threshold can be adaptively changed in various implementations, of the present invention. Therefore, some adaptive methods can be developed for this purpose.

In various implementations, the QP ranges from 30 to 38, and since local MAE of propagated errors is generally much higher than that of coding artifacts, threshold selection can be performed. Another reason for this threshold being selected is that the minimum threshold of contrast (or luminance) masking utilized in the later processing of various implementations (described further below) is also 10, and local distortion below 10 pixel values will be masked out by the combination effect of contrast and texture maskings.

Other method for measuring the similarity between images can be used in this step, such as SSIM. For some implementations of the quality metrics, the threshold selecting can be avoided.

III. Perceptual Distortion Calculation

At least one reason why MAE is not typically a good method for assessing perceptual video quality is that it treats each image pixel equally, without considering any HVS characteristics. Therefore, at least one implementation takes advantage of texture and contrast maskings to improve its performance.

Contrast masking, or luminance masking, is the effect that, for digital images, the HVS finds it hard to tell the luminance difference between a test and its neighborhood in either very dark or white regions, which means the visibility threshold in those regions is high. A piece-wise linear approximation for this fact is thus determined as the visibility threshold due to background luminance adaptation, as shown in Figure 3. Figure 3 represents experimental data wherein the vertical axis 10 is the visibility threshold (cont_threshold of Equation 6), horizontal axis 20 is the background luminance, and the solid line 30 is the visibility threshold as a function of background luminance.

Texture masking is the effect that some image information is not visible or noticeable to the HVS, because of its highly textual neighborhood. Specifically, some distortion can be masked out if it is located in this textural area, so that perceptual quality does not degrade much. The texture degree can be quantified based on image statistics information, such as standard deviation and 2D autocorrelation matrix. However, in various implementations, the proposed method uses the density of edges to indicate the richness of textures in a local image area, and this has a good trade-off between performance and computation complexity.

III. 1 Perceptual Distortion of Propagated Errors

Propagated errors are usually some distorted image regions or small image pieces located at wrong positions. Because of the local visual effect of this kind of errors, they can be affected by both contrast and texture masking effects jointly. In other words, the local distortion caused by propagated errors can be noticed. For example, if the errors are above the visibility threshold of the combined masking effects. Otherwise, the distortion cannot be seen. Just-Noticeable-Distortion (JND) means that amount of distortion that can be just seen by the HVS.

In order to calculate a JND profile of each block in a reference frame, we propose a block-based JND algorithm shown in Figure 4 that, for each 8x8 block position, models the block's visibility threshold of total masking (JND) effects as:

$$\text{Thresh\_visibility} = \text{JND} = \max(\ b^*\text{den\_edge},\ \text{cont\_thresh}) \qquad (4)$$

The variable *den_edge* is the average density of the 8 neighbor blocks in an edge map of a reference frame, and the *cont_thresh* variable is the visibility threshold generated only by the contrast masking effect, which is illustrated in Figure 3. Numerical parameter b is a scaling parameter such that *b\*den_edge* is the visibility threshold of only the texture masking effect. In one implementation, *b* is set to 500. However, *b* can be chosen, for example, to correlate subjective test results with the objective numeric score. For example, by appropriately choosing a value for b, the correlation between distortion values and subjective test results may be increased.

Note that the proposed JND profile is block based, and by comparing this to the conventional pixel-based JND, the computation complexity is reduced significantly. Further, a block-based approach is particularly suitable in the situation where the propagated errors are clustered locally, rather than spreading out, because the neighborhood for a pixel-based JND is typically too small and may be entirely distorted by propagated errors.

From this JND profile, the distortion of a block can be normalized and converted into JND units. Therefore, the total perceptual distortion caused by propagated errors follows:

$$D_P^{jnd}(i, j) = \max\left( \frac{D_O(i, j)}{JND(i, j)} - 1,\ 0 \right) \qquad (5)$$

Here an 8x8 block(i,j) is identified as a packet loss affected block. $D_O(i,j)$ represents its original distortion between the original reference frame and the processed frame. In the preferred embodiment, it is calculated as MAE as defined in Equation 1. $D_O^{jnd}(i,j)$ is the JND converted perceptual distortion of the block. JND(i,j) is calculated via Equation 4.

A summary of the process of calculating perceptual distortions caused by propagated errors is as follows:

1. Conduct edge detection based on the original reference frame. Based on the resultant per-pixel binary edge map, calculate edge density for each 8x8 block as described above for Equation 4.

2. Calculate the difference between the reference and processed frames, and select 8x8 blocks with the difference larger than threshold in block 150 (in the implementation 10) as packet loss affected blocks. Otherwise, the block is identified as a source coding affected block.

3. For a packet loss affected block, calculate the visibility thresholds of contrast masking and texture masking, and then the overall JND threshold as defined in Equation 4.

4. For a packet loss affected block, calculate its perceptual distortion as defined in Equation 5.

III.2 Perceptual Distortion of coding artifacts

Although the perceptual video quality degradation is mainly due to propagated errors caused by packet losses when video is encoded with lower QP, the visual impact of coding artifacts increases as QP increases. Therefore, we count those distortions into the total distortion of the whole frame. However, because of the globality of coding artifacts, the approach of using neighbors to mask the center distortion can become problematic, since the neighbors are also typically distorted by similar artifacts.

Through intensive subjective experiments, it has been determined that this distortion caused by coding artifacts tends to "spread" over the smooth area, and cause more perceptual distortion, but this trend seems to be "stopped" or "relieved" in strong edge areas. Thus, we propose another texture masking method, based on edge information to calculate the perceptual distortion of coding artifacts. The scheme is based on the finding that the blocks with more edges suffer from less distortion, and for the blocks with fewer edges, the distortion will be bigger. This relation between edge density and its perceptual coding distortion can be modeled as follows:

$$D_C^{jnd}(i,j) = D_O(i,j) \cdot (1 - den\_edge) \qquad (6)$$

Here, an 8x8 block $(i, j)$ is identified as a source-coding affected block. $D_O(i,j)$ represents its original distortion between the original reference frame and the processed frame. In the preferred embodiment, it is calculated as MAE as defined in Equation(1). $D_C^{jnd}(i,j)$ is the perceptual distortion of the block.

Note that distortion scaling factor ($1-den\_edge$) in Equation (6) is a simplified version of a scaling factor, yet it works well in many implementations. To obtain a higher correlation between the calculated and actual perceptual distortions, other implementations treat different image areas, such as plain, edge, or texture areas, differently according to the HVS properties.

IV. Distortions Pooling

As stated above, the video quality degradation can be caused by the joint effect of coding artifacts and propagated errors. In addition, as described above, we can determine the perceptual quality degradation of these different distortions separately. Various implementations use a distortions pooling or weighting to produce a final single quality indicator for the entire video frame. One such pooling/weighting follows:

$$D_C^{jnd}(i,j) = D_O(i,j) \cdot (1 - den\_edge) \qquad (6)$$

Here A and B represent the set of all 8x8 blocks identified as packet loss affected or source-coding affected, respectively. *PD* is the total perceptual distortion of the entire processed frame, and the parameter *w* is the weighting factor between the two kinds of distortions. Actually, *w* can also be a function of the quantization parameter (QP) of the encoder. Implementations that have sufficient QP samples can predict a relation between *w and* QP. Other implementations simply set *w* to a value, such as, for example, 0.125 and 0.25 for two QP respectively. Other forms of Equation (9) will be readily apparent to one of ordinary skill in the art.

Based on the total perceptual distortion calculated above, the objective estimated quality scores correlate fairly well with subjective video quality ratings, with Pearson correlation -0.9084, while the correlation between conventional AME and subjective scores is 0.4395, which suggests the success of the metric proposed in various implementations described in this disclosure.

The present invention discloses one or more implementations having particular features and aspects. However, features and aspects of described implementations may also be adapted for other implementations. For example, the described methods can be varied in different implementations in several ways. Some of these ways include, for example, applying these concepts to systems in which partial frames are lost, or more than 2 frames in a GOP are lost, or discontinuous frames in a GOP are lost. Although implementations described herein may be described in a particular context, such descriptions should in no way be taken as limiting the features and concepts to such implementations or contexts. For instance, in one implementation, both the distortions caused by lossy coding and packet losses are pooled.

The implementations described herein may be implemented in, for example, a method or process, an apparatus, or a software program. Even if only discussed in the context of a single form of implementation (for example, discussed only as a method), the implementation or features discussed may also be implemented in other forms (for example, an apparatus or program). An apparatus may be implemented in, for example, appropriate hardware, software, and firmware. The methods may be implemented in, for example, an apparatus such as, for example, a computer or other processing device. Additionally, the methods may be implemented by instructions being performed by a processing device or other apparatus, and such instructions may be stored on a computer readable medium such as, for example, a CD, or other computer readable storage device, or an integrated circuit. Further, a computer readable medium may store the data values produced by an implementation.

As should be evident to one of skill in the art, implementations may also produce a signal formatted to carry information that may be, for example, stored or transmitted. The information may include, for example, instructions for performing a method, or data produced by one of the described implementations.

Additionally, many implementations may be used in one or more of an encoder, a pre-processor to an encoder, a decoder, or a post-processor to a decoder. One or more of the described methods may be used, for example, in an RD calculation to inform an encoding decision, or to monitor quality of received image data.

In one implementation, a full-reference method for assessing perceptual quality of decoded video, which evaluates the quality of error-propagated frames caused by packet losses, where coding artifacts and distortion of error propagation caused by packet losses are separately evaluated with different spatial masking schemes.

In another implementation, the present invention includes a method to model block-based Just-Noticeable-Distortion that combines both texture masking effect and contrast masking effect for distortion caused by packet loss, where edge density in neighbor blocks is used to calculate the texture masking threshold for distortion caused by packet loss. Further, the edge density in a block may be used to calculate the texture masking threshold for source coding artifacts by H.264.

In another implementation, measurement of the quality of a digital image or a sequence of digital images includes a method that measures distortion associated with packet loss, or method that distinguishes between distortion attributed to packet loss and distortion attributed to coding artifacts. A threshold is applied to a result of the distortion in order to classify the result as being associated with packet loss or coding artifacts, or the distortion attributed to packet loss and the distortion attributed to coding artifacts may be combined to provide a total distortion value for the digital image or sequence of digital images.

In any of the above implementations, one or more masks may be used to adjust distortion values, specifically one or more of a texture mask and a contrast mask may be used. A JND may be determined using at least one of the one or more masks, and a measure of edge intensity is used to determine a texture mask and a piecewise continuous function of pixel-intensity is used to determine a contrast mask.

In an implementation, a method for assessing perceptual quality of a digital image or a sequence of digital images is provided, which measures distortion associated with one or more error propagations arising from error concealment after packet loss and coding artifacts. A threshold is applied to a result of measured distortion in order to classify the result as being associated with packet loss or coding artifacts. The distortion attributed to packet loss and the distortion attributed to coding artifacts may be combined to provide a total distortion value for the digital image or sequence of digital images. One or more masks are used to adjust distortion values, wherein one or more masks including a texture mask and a contrast mask. A JND is determined based on at least one of the one or more masks. Further, a measure of edge intensity is used to determine a texture mask, and a piecewise continuous function of pixel-intensity is used to determine a contrast mask.

Creating, assembling, storing, transmitting, receiving, and/or processing a measure of distortion according to one or more implementations described in this disclosure.

According to the invention, a device (such as, for example, an encoder, a decoder, a pre-processor, or a post-processor) has been considered that is capable of operating according to, or in communication with, one of the described implementations. Further, another device (such as, for example, a computer readable medium) is considered, which is used for storing a measure of distortion according to an implementation described in this disclosure, or for storing a set of instructions for measuring distortion according to one or more of the implementations described in this disclosure.

Additionally, and according to the present invention, a signal is considered that is formatted in such a way to include information relating to a measure of distortion described in this disclosure. The signal may be an electromagnetic wave or a baseband signal.

The foregoing illustrates some of the possibilities for practicing the invention. Many other implementations are possible within the scope of the invention. It is, therefore, intended that the foregoing description be regarded as illustrative rather than limiting, and that the scope of the invention is given by the appended claims

## Claims

1. A method for determining distortion in a digital image (105) comprising multiple portions, wherein for each of said portions a corresponding value indicating an amount of distortion is provided and accessed; **characterized by** the steps of

    classifying said values as packet-loss distortion (135) or coding-artifact distortion (155),
    wherein a threshold (30) is applied to said values in order to classify said values;
    modifying each of said classified values to account for visibility differences of the human visual system responsive to the classifying step, wherein , for packet loss-affected distortion values, one or more masks are used to adjust each of said values, the one or more masks including a texture mask and a contrast mask, and a Just-Noticeable-Distortion (JND) is determined based on at least one of the one or more masks; a measure of edge intensity is used to determine a texture mask; and a piecewise continuous function of pixel-intensity is used to determine a contrast mask; and
    combining (160) the modified values for the multiple portions to form a combined value indicating an amount of distortion for the multiple portions.

2. The method of claim 1 wherein classifying the value comprises:

    comparing (150) a threshold to each of the values; and
    determining whether each of the values is a packet-loss distortion or a coding-artifact distortion based on a result of the comparing step.

3. The method of claim 1 wherein modifying the classified value further comprises:

    comparing (150) each of the values to a visibility threshold that is based on one or more of luminance of the respective portion or texture of the respective portion; and
    reducing each of the values based on a result of the comparing.

4. The method of claim 3 wherein the visibility threshold includes one or more of:

    a threshold based on the human visual system ability to see distortion in areas of relatively higher luminance,
    a threshold based on the human visual system ability to see distortion in areas of relatively lower luminance, or
    a threshold based on the human visual system ability to see distortion in areas of relatively higher texture, where texture is represented by density of edges.

5. The method of claim 1 wherein modifying each of the classified values comprises:

    adjusting each value based on density of edges in the respective portion.

6. The method of any of the preceding claims, wherein the method further comprising applying the result of the method to video to reduce distortion or correct the video sequence.

## Patentansprüche

1. Verfahren zum Bestimmen einer Verzerrung in einem digitalen Bild (105), das mehrere Abschnitte umfasst, wobei für jeden der Abschnitte ein entsprechender Wert, der einen Grad der Verzerrung angibt, bereitgestellt und darauf zugegriffen wird; **gekennzeichnet durch** die folgenden Schritte:

    Klassifizieren der Werte als Paketverlustverzerrung (135) oder als Codierungsartefaktverzerrung (155),
    wobei auf die Werte ein Schwellenwert (30) angewendet wird, um die Werte zu klassifizieren;

Ändern jedes der klassifizierten Werte, um Sichtbarkeitsunterschiede des menschlichen Sehsystems zu berücksichtigen, in Reaktion auf den Klassifizierungsschritt, wobei für vom Paketverlust betroffene Verzerrungswerte eine oder mehrere Masken verwendet werden, um jeden der Werte einzustellen, wobei die eine oder die mehreren Masken eine Texturmaske und eine Kontrastmaske enthalten, und

wobei auf der Grundlage mindestens einer der einen oder der mehreren Masken eine gerade noch wahrnehmbare Verzerrung (JND) bestimmt wird; wobei zum Bestimmen einer Texturmaske ein Maß für die Kantenstärke verwendet wird; und

wobei zum Bestimmen einer Kontrastmaske eine stückweise stetige Funktion der Pixelstärke verwendet wird; und Kombinieren (160) der geänderten Werte für die mehreren Abschnitte, um einen kombinierten Wert zu bilden, der einen Grad der Verzerrung für die mehreren Abschnitte angibt.

2.  Verfahren nach Anspruch 1, bei dem das Klassifizieren des Werts umfasst:

    Vergleichen (150) eines Schwellenwerts für jeden der Werte, und
    Bestimmen, ob jeder der Werte eine Paketverlustverzerrung oder eine Codierungsartefaktverzerrung ist, auf der Grundlage eines Ergebnisses des Vergleichsschritts.

3.  Verfahren nach Anspruch 1, bei dem das Ändern des klassifizierten Werts ferner umfasst:

    Vergleichen (150) jedes der Werte mit einem Sichtbarkeitsschwellenwert, der auf der Farbdichte des jeweiligen Abschnitts und/oder auf der Textur des jeweiligen Abschnitts beruht; und
    Verringern jedes der Werte auf der Grundlage eines Ergebnisses des Vergleichs.

4.  Verfahren nach Anspruch 3, bei dem der Sichtbarkeitsschwellenwert einen oder mehrere der Folgenden enthält:

    einen Schwellenwert, der auf der Fähigkeit des menschlichen Sehsystems, in Bereichen verhältnismäßig höherer Farbdichte eine Verzerrung zu sehen, beruht,
    einen Schwellenwert, der auf der Fähigkeit des menschlichen Sehsystems, in Bereichen verhältnismäßig niedrigerer Farbdichte eine Verzerrung zu sehen, beruht oder
    einen Schwellenwert, der auf der Fähigkeit des menschlichen Sehsystems, in Bereichen verhältnismäßig höherer Textur, wobei die Textur durch die Dichte der Kanten dargestellt wird, eine Verzerrung zu sehen, beruht.

5.  Verfahren nach Anspruch 1, bei dem das Ändern jedes der klassifizierten Werte umfasst:

    Einstellen jedes Werts auf der Grundlage einer Dichte der Kanten in dem jeweiligen Abschnitt.

6.  Verfahren nach einem der vorhergehenden Ansprüche, bei dem das Verfahren ferner das Anwenden des Ergebnisses des Verfahrens auf ein Video zum Verringern der Verzerrung oder zum Korrigieren der Videosequenz umfasst.

**Revendications**

1.  Procédé permettant de déterminer une distorsion dans une image numérique (105) comprenant de multiples parties, dans lequel pour chacune desdites parties, une valeur correspondante indiquant une quantité de distorsion est fournie et accessible, **caractérisé par** les étapes suivantes :

    classification desdites valeurs comme une distorsion de perte de paquets (135) ou distorsion d'artéfact de codage (155),
    dans lequel un seuil (30) est appliqué auxdites valeurs afin de classer lesdites valeurs ; modification de chacune desdites valeurs classées pour tenir compte des différences de visibilité du système visuel humain réagissant à l'étape de classification, dans lequel pour les valeurs de distorsion affectées par les pertes de paquet, un ou plusieurs masques sont utilisés pour régler chacune desdites valeurs, le ou les masques comprenant un masque de texture et un masque de contraste, et une distorsion (JND) à peine remarquable est déterminée par rapport à au moins un du ou des masques, une mesure de l'intensité des bords est utilisée pour déterminer un masque de texture, et une fonction continue par morceau d'intensité de pixel est utilisée pour déterminer un masque de contraste, et
    combinant (160) les valeurs modifiées pour que les parties multiples forment une valeur combinée indiquant une quantité de distorsion pour les parties multiples.

**2.** Procédé selon la revendication 1, dans lequel la classification de la valeur comprend :

la comparaison (150) d'un seuil à chacune des valeurs et
détermination si chacune des valeurs est une distorsion de perte de paquet d'une distorsion d'artéfact de codage
basé sur un résultat de l'étape de comparaison.

**3.** Procédé de la revendication 1 dans lequel la modification de la valeur classée comprend en outre, la comparaison
(150) de chacune des valeurs par rapport au seuil de visibilité basé sur une ou plusieurs luminances de partie
respective ou de la texture de la partie respective ; et
réduction de chacune des valeurs basé sur un résultat de la comparaison.

**4.** Procédé de la revendication 3 dans lequel le seuil de visibilité inclut un ou plusieurs : un seuil basé sur la capacité
du système visuel humain à voir les distorsions dans des zones à luminance relativement plus forte, un seuil basé
sur la capacité du système visuel humain à voir les distorsions dans des zones à luminance relativement moins
fortes, ou
un seuil basé sur la capacité du système visuel humain à voir les distorsions dans des zones à luminance relativement
moins fortes, ou

**5.** Procédé selon la revendication 1 dans lequel la modification de chacune des valeurs classées comprend :

l'ajustement de chaque valeur basée sur la densité des bords dans la partie respective.

**6.** Procédé selon l'une quelconque des revendications précédentes, dans lequel le procédé comprend en outre l'application du résultat du procédé à la vidéo pour réduire al distorsion ou corriger la séquence vidéo.

EP 2 229 786 B1

OUTPUT YUV SEQUENCE → ENCODING → TRANSMISSION → DECODING → OUTPUT YUV SEQUENCE

300  310  320  330  340

**FIGURE 1**

**FIGURE 2**

**FIGURE 3**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 61011525 B
- US 20070280129 A, Jia
- WO 200713038 A, Suresh
- WO 03005727 A, Jung

### Non-patent literature cited in the description

- **Z. WANG ; A. BOVIK ; H. SHEIKH ; E. SIMONCELLI.** Image Quality Assessment: From Error Visibility to Structural Similarity. *IEEE Transactions on Image Processing,* April 2004, vol. 13 (4
- **W. LIN ; L. DONG ; P. XUE.** Visual Distortion Gauge Based on Discrimination of Noticeable Contrast Changes. *IEEE Transactions on Circuits and Systems for Video Technology,* July 2003, vol. 15 (7
- **Z. WANG ; A. C. BOVIK.** A human visual system based objective video distortion measurement system. *Proceedings of the International Conference on Multimedia Processing and Systems,* August 2001
- **M CLAYPOOL ; J. TANNER.** The Effects of Jitter on the Perceptual Quality of Video. *ACM Multimedia,* November 1999, vol. 2
- **R. R. PASTRANA-VIDAL ; J. C. GICQUEL.** Automatic quality assessment of video fluidity impairments using a no-reference metric. *Proc. of 2nd Int. Workshop on Video Processing and Quality Metrics for Consumer Electronics,* January 2006
- **K. YANG ; C. GUEST ; K. EL-MALEH ; P. DAS.** Perceptual temporal quality metric for compressed video. *Multimedia, IEEE Transactions,* November 2007
- **X. FENG ; T. LIU.** Evaluation of perceptual video quality using saliency map. *ICIP,* 2008
- **R. VENKATESH ; A, BOPARDIKAR ; A. PERKIS ; O. HILLESTAD.** No-reference metrics for video streaming applications. *Proceedings of PV 2004,* 13 December 2004
- **A. REIBMAN ; S. KANUMURI ; V. VAISHAMPAYAN ; P. COSMAN.** *Visibility of individual packet losses in MPEG-2 video*
- **A. REIBMAN ; S. KANUMURI ; V. VAISHAMPAYAN ; P. COSMAN.** Visibility of individual packet losses in MPEG-2 video. *ICIP,* 2004
- **U. ENGELKE ; H. ZEPERNICK.** *An Artificial Neural Network for Quality Assessment in Wireless Imaging Based on Extraction of Structural Information*
- **U ENGELKE ; H ZEPERNICK.** An Artificial Neural Network for Quality Assessment in Wireless Imaging Based on Extraction of Structural Information. *ICASSP,* 2007